Europäisches Patentamt

European Patent Office

Office européen des brevets

(11) Veröffentlichungsnummer: **0 318 102**
**A2**

# (12) EUROPÄISCHE PATENTANMELDUNG

(21) Anmeldenummer: **88202632.1**

(22) Anmeldetag: **23.11.88**

(51) Int. Cl.⁴: **C01F 7/30**

(30) Priorität: **25.11.87 DE 3739905**

(43) Veröffentlichungstag der Anmeldung:
**31.05.89 Patentblatt 89/22**

(84) Benannte Vertragsstaaten:
**DE FR GB NL**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB NL**

(72) Erfinder: **Clasen, Rolf, Dr. Dipl.-Phys.**
**Schlossparkstrasse 36**
**D-5100 Aachen(DE)**

(74) Vertreter: **Nehmzow-David, Fritzi-Maria et al**
**Philips Patentverwaltung GmbH**
**Wendenstrasse 35 Postfach 10 51 49**
**D-2000 Hamburg 1(DE)**

(54) Verfahren und Vorrichtung zur Herstellung von Aluminiumoxid-Teilchen der alpha-Modifikation.

(57) Verfahren und Vorrichtung zur Herstellung von hochdispersen Aluminiumoxid-Teilchen, wobei ein Aluminiumchlorid enthaltender wasserstoffhaltiger Gasstrom in einem Brenner mit einem sauerstoffhaltigen Gasstrom zusammengeführt wird und die in einer gezündeten Flamme gebildeten Aluminiumoxid-Teilchen aufgefangen werden und wobei zur Herstellung von Aluminiumoxid-Teilchen der alpha-Modifikation ein Wasserstoffstrom, der durch Überleiten über auf eine Temperatur im Bereich von 100 bis 400 °C erhitztes Aluminiumtrichlorid mit Aluminiumtrichlorid gesättigt ist, konzentrisch mit einem Sauerstoffstrom zusammengeführt wird und daß die am Ende der leuchtenden Flamme gebildeten Aluminiumoxid-Teilchen mittels einer Vorrichtung aufgefangen werden.

Fig. 2

## Verfahren und Vorrichtung zur Herstellung von hochdispersen Aluminiumoxid-Teilchen

Die Erfindung betrifft ein Verfahren zur Herstellung von hochdispersen Aluminiumoxid-Teilchen, wobei ein Aluminiumchlorid enthaltender wasserstoffhaltiger Gasstrom in einem Brenner mit einem sauerstoffhaltigen Gasstrom zusammengeführt wird und die in einer gezündeten Flamme gebildeten Aluminiumoxid-Teilchen aufgefangen werden. Die Erfindung betrifft weiter eine Vorrichtung zur Durchführung eines solchen Verfahrens.

Zur Herstellung von Oxidkeramik aus Aluminiumoxid wird pulverförmiges Ausgangsmaterial benötigt. Die zur Herstellung der bekannten Aluminiumoxid-Keramik eingesetzten Pulver werden durchweg nach naßchemischen Verfahren hergestellt und die gewünschte Teilchengröße wird durch anschließendes Mahlen eingestellt. Dabei kann eine Teilchengröße < 1 μm nur schwer erreicht werden. Mit diesen Pulvern einer relativ großen Korngröße ist der Nachteil verbunden, daß ihre Sinteraktivität relativ gering ist, so daß hohe Sintertemperaturen ( > 1500 °C) erforderlich sind, um dichtgesinterte Körper zu erhalten. Ein weiterer Nachteil ist, daß das Kornwachstum mit steigenden Sintertemperaturen rapide zunimmt, so daß das Kornwachstum hemmende Zusätze, wie z.B. Magnesiumoxid, zugesetzt werden müssen, was es erschwert, hochreine Aluminiumoxid-Keramik herzustellen.

Hochdisperse Aluminiumoxid-Pulver mit Teilchendurchmessern von etwa 10 bis 20 nm sind bereits auf dem Markt erhältlich, diese Pulver können jedoch nicht vorteilhaft als Ausgangsmaterial für eine Aluminiumoxid-Keramik eingesetzt werden, da sie vorwiegend aus Aluminiumoxid der gamma-Modifikation bestehen. Beim Sintern eines Grünkörpers aus diesem Material tritt bei Temperaturen oberhalb 1200 °C eine irreversible Phasenumwandlung in die stabile alpha-Modifikation auf, die mit einer Dichtezunahme von etwa 2,9 g/ml auf 3,9 g/ml verbunden ist.

Hierbei sintern sich berührende Teilchen bereits zusammen, so daß ein Grünkörper aus alpha-Aluminiumoxid-Teilchen entsteht, die Durchmesser von > 1 μm und damit keine erhöhte Sinteraktivität mehr aufweisen. Zur Dichtsinterung werden daher Temperaturen > 1500 °C benötigt.

Aus EP-A 172 764 ist ein Verfahren zur Herstellung von Aluminiumoxid-Keramik bekannt, die bereits bei einer Temperatur von 1200 °C dichtgesintert werden kann. Dies wird durch Zusatz von alpha-Aluminiumoxid-Keimen erreicht, die die Umwandlung der gamma-Modifikation des Aluminiumoxids in die alpha-Modifikation beschleunigen, wodurch die Temperatur zum Dichtsintern eines aus derartigen Aluminiumoxid-Pulvern hergestellten Grünkörpers gesenkt werden kann. Nachteilig ist bei diesem Verfahren, daß die erforderlichen alpha-Aluminiumoxid-Keime nur sehr schwierig durch Abtrennen von submikroskopischen Teilchen von gemahlenem Korundpulver mittels Zentrifugieren hergestellt werden können.

Aus der deutschen Patentanmeldung C8391 IVa/22f war ein Verfahren der eingangs genannten Art zur Herstellung von feinteiligem Aluminiumoxid-Pigment durch thermische Zersetzung von Aluminiumsalzen bekannt, wobei in einem Trägergas suspendiertes gepulvertes Aluminiumsalz, z.B. Aluminiumchlorid, in eine wärmeisolierte Reaktionszone eingeführt, mit einer durch Verbrennen eines senkrecht zur Fließrichtung des Aluminiumsalzes eingeführten brennbaren Gases in einem sauerstoffhaltigen Gas erzeugten turbulenten Flamme vermischt und zu Aluminiumoxid und gasförmigen Bestandteilen zersetzt und das Aluminiumoxid abgetrennt wird.

Mit dem bekannten Verfahren sollen Aluminiumoxid-Teilchen in Pigmentqualität, d.h. einer Teilchengröße im Bereich von 0,005 bis 10 μm und einer spezifischen Oberfläche von 5 bis 150 m²/g hergestellt werden. Mit dem bekannten Verfahren ist es nicht möglich, hochdisperse Aluminiumoxid-Teilchen der alpha-Modifikation herzustellen.

Der Erfindung liegt die Aufgabe zugrunde, ein Verfahren und eine Vorrichtung anzugeben, mit dem hochdisperse Aluminiumoxid-Teilchen der alpha-Modifikation auf sehr einfache und kostengünstige Weise hergestellt werden können.

Diese Aufgabe wird erfindungsgemäß dadurch gelöst, daß zur Herstellung von Aluminiumoxid-Teilchen der alpha-Modifikation ein Wasserstoffstrom, der durch Überleiten über auf eine Temperatur im Bereich von 100 bis 400 °C erhitztes Aluminiumtrichlorid mit Aluminiumtrichlorid gesättigt ist, konzentrisch mit einem Sauerstoffstrom zusammengeführt wird und daß die am Ende der leuchtenden Flamme gebildeten Aluminiumoxid-Teilchen mittels einer Vorrichtung aufgefangen werden.

Nach einer vorteilhaften Weiterbildung des Verfahrens nach der Erfindung wird der Wasserstoffstrom über auf eine Temperatur von ≈ 270 °C erhitztes Aluminiumtrichlorid geleitet.

Eine Vorrichtung zur Durchführung dieses Verfahrens ist gekennzeichnet durch ein innerhalb eines Ofens angeordnetes, mit einem Gasauslaßrohr versehenes, an seiner dem Gasauslaßrohr gegenüberliegenden Ende verschließbares und dort mit einem Zuführungsrohr für Wasserstoffgas versehenes Reaktionsgefäß, ein zur Aufnahme von Aluminiumtrichlorid bestimmtes, innerhalb des Reaktionsgefäßes angeordnetes Schiffchen, ein außerhalb des Reaktionsgefäßes durch den Ofen geführtes Zuführungsrohr für Sauerstoffgas, in das das Gasauslaßrohr für den mit Aluminiumtrichlorid gesättigten Wasserstoffstrom konzentrisch mündet und das in diesem Mündungsbereich als Gasbrenner eingesetzt wird und eine am Ende der aus dem Brenner austretenden leuchtenden Flamme angeordnete Vorrichtung, mittels welcher innerhalb einer Flammenzone gebildete alpha-Aluminiumoxid-Teilchen aufgefangen werden.

Nach einer vorteilhaften weiteren Ausgestaltung der Vorrichtung gemäß der Erfindung ist der aus dem Gasauslaßrohr für den mit Aluminiumtrichlorid gesättigten Wasserstoff strom und dem es konzentrisch umgebenden Zuführungsrohr für Sauerstoffgas gebildete Gasbrenner von einem weiteren, zwischen dem Gasauslaßrohr und dem Zuführungsrohr angeordneten Rohr konzentrisch umgeben, durch welches der Flamme reines Wasserstoffgas zuführbar ist.

Der vorliegenden Erfindung liegt die Erkenntnis zugrunde, daß für die Ausbildung von Aluminiumoxid-Teilchen der alpha-Modifikation eine solche Flammentemperatur erforderlich ist, daß die gebildeten Aluminiumoxid-Teilchen eine Temperatur T oberhalb 1300 °C erreichen. Diese hohen Flammentemperaturen werden mit einem Wasserstoff-Sauerstoff-Gasgemisch erreicht. Beispielsweise Knallgas mit zwei Volumenteilen $H_2$ und einem Volumenteil $O_2$ hat eine Flammentemperatur von 3100 bis 3300 °C. Mit beliebigen Brenn- und Oxidationsgasen ist zwar eine Flammenhydrolyse von Metall- oder Metalloidhalogeniden möglich, nicht jedoch die gezielte Darstellung einer bestimmten Modifikation, wie bei dem vorliegenden Verfahren die Bildung von Aluminiumoxid der alpha-Modifikation, weil die Flammentemperaturen nicht hoch genug sind.

Weiter liegt der vorliegenden Erfindung die Erkenntnis zugrunde, daß zur Herstellung von Aluminiumoxid-Teilchen der alpha-Modifikation neben der relativ hohen Flammentempera tur auch eine laminare Gasströmung erforderlich ist, was gemäß der Vorrichtung der vorliegenden Erfindung über die konzentrische Zuführung des mit gasförmigem Aluminiumtrichlorid gesättigten Wasserstoffstroms in den Sauerstoffstrom erreicht wird.

Mit dem Verfahren und der Vorrichtung gemäß der vorliegenden Erfindung sind folgende Vorteile verbunden: Durch das erfindungsgemäße Verfahren ist es möglich, Aluminiumoxid-Teilchen der alpha-Modifikation direkt mit einem Durchmesser von 10 bis 500 nm, vorzugsweise 20 bis 200 nm, herzustellen.

Es wurde nachgewiesen, daß nach der Erfindung hergestellte alpha-Aluminiumoxid-Teilchen keine Mikroporosität aufweisen. Ein weiterer Vorteil ist, daß sich durch die Gasphasenabscheidung nicht zu festen Aggregaten verwachsene Teilchen ausbilden.

Die nach dem vorliegenden Verfahren hergestellten Teilchen müssen also nicht mehr durch einen Mahlprozeß auf eine gewünschte Teilchengröße vermahlen werden, sie lassen sich leicht dispergieren und zu einem homogenen Grünkörper verformen. Derartige Grünkörper weisen eine hohe Sinteraktivität auf und lassen sich bei einer Temperatur < 1500 °C, vorzugsweise schon bei einer Temperatur von1200 °C, dichtsintern. Da keine Mahlprozesse erforderlich sind, läßt sich hochreine Aluminiumoxidkeramik herstellen.

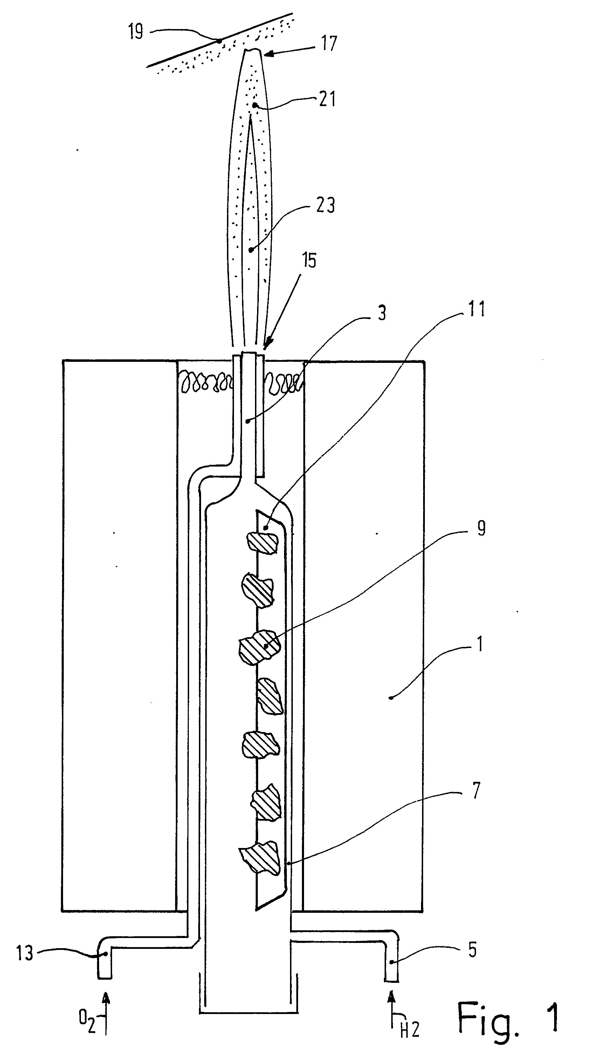

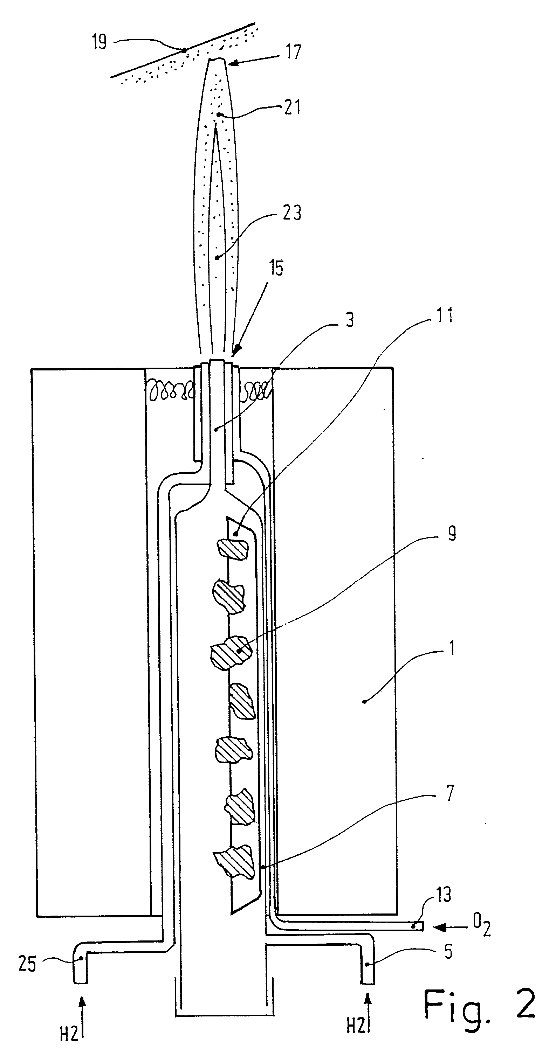

Anhand der Zeichnung wird ein Ausführungsbeispiel der Erfindung beschrieben und in ihrer Wirkungsweise erläutert. Die Figuren 1 und 2 zeigen für die Herstellung von alpha-Aluminiumoxid-Teilchen aus der Gasphase geeignete Vorrichtungen im Schnitt.

Alpha-Aluminiumoxid-Teilchen werden durch Verbrennen von Aluminiumtrichlorid in einer Knallgasflamme aus Wasserstoff und Sauerstoff erhalten. Dabei wird mittels eines Zuführungsrohres 5 ein Wasserstoffgasstrom über ein in einem Reaktionsgefäß 7 mit einem Gasauslaßrohr 3 innerhalb eines Ofens 1 angeordnetes, Aluminiumtrichlorid 9 enthaltendes Schiffchen 11 geleitet und mit Aluminiumtrichlorid gesättigt und bis zu einem Gasbrenner 15 geführt, der durch ein das Gasauslaßrohr 3 konzentrisch umgebendes, außerhalb des Reaktionsgefäßes 7 durch den Ofen 1 geführtes Zuführungsrohr 13 für Sauerstoffgas gebildet wird. Das am Gasbrenner 15 gebildete Gasgemisch wird gezündet. In einer Flammenzone 23 werden alpha-Aluminiumoxid-Teilchen 21 gebildet, die mittels einer am Ende 17 der leuchtenden Flamme angebrachten Vorrichtung 19 aufgefangen werden. Das Reaktionsgefäß 7 und die Rohre 3 und 5 werden vorteilhafterweise aus Quarzglas hergestellt.

Ausführungsbeispiel:

Im Reaktionsgefäß 7 mit einem Durchmesser von etwa 30 mm und einer Länge von 250 mm aus z.B. Quarzglas wird Aluminiumtrichlorid 9 auf eine Temperatur von 270 °C erhitzt. Über das Zuführungsrohr 5 wird ein Wasserstoffgasstrom einer Strömungsgeschwindigkeit von etwa 2 l/min über das in dem Schiffchen 11 angeordnete Aluminiumtrichlorid 9 geleitet. Der mit Aluminiumtrichlorid gesättigte Gasstrom tritt durch das Gasauslaßrohr 3 eines Durchmessers von 2 mm im Gasbrenner 15 aus, der aus dem Gasauslaßrohr 3 und dem dieses Gasauslaßrohr 3 konzentrisch umgebenden Zuführungsrohr 13 für Sauerstoffgas gebildet wird. Das Sauerstoffgas wird mit einer Strömungsgeschwindigkeit von etwa 1 l/min über das Zuführungsrohr 13 außerhalb des Reaktionsgefäßes 7 durch den Ofen 1 geleitet. Am Mündungsbereich des Gasbrenners 15 wird das ausströmende Gas gezündet, es entsteht dabei eine laminare Flamme einer Länge von etwa 100 mm, wobei in ihrer Flammenzone 23 gebildetealpha-Aluminiumoxid-Teilchen 21 am Ende 17 der leuchtenden Flamme mittels einer Vorrichtung 19, beispielsweise einem Edelstahlblech, aufgefangen werden. Die Abscheiderate dieser Anordnung beträgt etwa 1 g/min.

Es wurden nicht-verwachsene Aluminiumoxid-Teilchen der alpha-Modifikation mit einer Oberfläche von 30 m²/g und mit einem Teilchendurchmesser im Bereich von 10 bis 500 nm, vorzugsweise von 20 bis 200 nm, hergestellt.

In Figur 2 ist ein weiteres Ausführungsbeispiel einer Vorrichtung zur Herstellung von Aluminiumoxid-Teilchen der alpha-Modifikation dargestellt, bei der der aus dem Gasauslaßrohr 3 für den mit Aluminiumtrichlorid gesättigtenWasserstoffstrom und dem es konzentrisch umgebenden Zuführungsrohr 13 für Sauerstoffgas gebildete Gasbrenner 15 von einem weiteren, zwischen dem Gasauslaßrohr 3 und dem Zuführungsrohr 13 angeordneten Rohr 25 konzentrisch umgeben ist, durch welches der Flamme reines Wasserstoffgas zuführbar ist. Auf diese Weise wird eine Knallgasflamme erreicht, deren Reaktionszone vom Mündungsbereich des Gasbrenners 15 in Richtung auf das Ende 17 der leuchtenden Flamme verschoben wird. Dies hat den Vorteil, daß der Mündungsbereich des Gasbrenners 15 nicht durch gebildete alpha-Aluminiumoxid-Teilchen 21 verstopft wird.

## Ansprüche

1. Verfahren zur Herstellung von hochdispersen Aluminiumoxid-Teilchen, wobei ein Aluminiumchlorid enthaltender wasserstoffhaltiger Gasstrom in einem Brenner mit einem sauerstoffhaltigen Gasstrom zusammengeführt wird und die in einer gezündeten Flamme gebildeten Aluminiumoxid-Teilchen aufgefangen werden,
dadurch gekennzeichnet,
daß zur Herstellung von Aluminiumoxid-Teilchen der alpha-Modifikation ein Wasserstoffstrom, der durch Überleiten über auf eine Temperatur im Bereich von 100 bis 400 °C erhitztes Aluminiumtrichlorid mit Aluminiumtrichlorid gesättigt ist, konzentrisch mit einem Sauerstoffstrom zusammengeführt wird und daß die am Ende der leuchtenden Flamme gebildeten Aluminiumoxid-Teilchen mittels einer Vorrichtung aufgefangen werden.

2. Verfahren nach Anspruch 1,
dadurch gekennzeichnet,
daß der Wasserstoffstrom über auf eine Temperatur von ≈ 270 °C erhitztes Aluminiumtrichlorid geleitet wird.

3. Vorrichtung zur Durchführung des Verfahrens nach den Ansprüchen 1 und 2 gekennzeichnet durch ein innerhalb eines Ofens (1) angeordnetes, mit einem Gasauslaßrohr (3) versehenes, an seiner dem Gasauslaßrohr gegenüberliegenden Ende verschließbares und dort mit einem Zuführungsrohr (5) für Wasserstoff versehenes Reaktionsgefäß (7), ein zur Aufnahme von Aluminiumtrichlorid (9) bestimmtes, innerhalb des Reaktionsgefäßes angeordnetes Schiffchen (11), ein außerhalb des Reaktionsgefäßes durch den Ofen geführtes Zuführungsrohr (13) für Sauerstoffgas, in das das Gasauslaßrohr für den mit Aluminiumtrichlorid gesättigten Wasserstoffgasstrom konzentrisch mündet und das in diesem Mündungsbereich als Gasbrenner (15) eingesetzt wird und eine am Ende (17) der aus dem Brenner austretenden leuchtenden Flamme angeordnete Vorrichtung (19), mittels welcher innerhalb einer Flammenzone (23) gebildete alpha-Aluminiumoxid-Teilchen (21) aufgefangen werden.

4. Vorrichtung nach Anspruch 3,
dadurch gekennzeichnet,
daß der aus dem Gasauslaßrohr (3) für den mit Aluminiumtrichlorid (9) gesättigten Wasserstoffstrom und dem es konzentrisch umgebenden Zuführungsrohr (13) für Sauerstoffgas gebildete Gasbrenner (15) von einem weiteren, zwischen dem Gasauslaßrohr und dem Zuführungsrohr angeordneten Rohr (25) konzentrisch umgeben ist, durch welches der Flamme reines Wasserstoffgas zuführbar ist.

**Fig. 1**

Fig. 2